# EUROPÄISCHE PATENTSCHRIFT

(11) **EP 1 332 987 B1**
(45) Veröffentlichungstag und Bekanntmachung des Hinweises auf die Patenterteilung: **31.08.2005**
(21) Anmeldenummer: 03001653.9
(22) Anmeldetag: 24.01.2003
(51) Int. Cl.: B65G 1/137

(54) **Lagervorrichtung**
Storage apparatus
Appareil de stockage

(30) Priorität: 27.01.2002 DE 10202873
(43) Veröffentlichungstag der Anmeldung: 06.08.2003
(73) Patentinhaber: Kendro Laboratory Products GmbH, 63505 Langenselbold (DE)
(72) Erfinder: Melching, Achim, 63579 Freigericht (DE)
(74) Vertreter: Lang, Friedrich

(56) Entgegenhaltungen:
- EP-A- 0 184 527
- WO-A-98/05753
- DE-A- 3 736 419
- DE-A- 4 028 059
- US-A- 3 268 097
- US-B1- 6 223 413

## Beschreibung

Die Erfindung betrifft eine Objekt-Lagervorrichtung mit mindestens zwei Lagerplätzen für Kassetten sowie mit einer Transporteinheit für ein Objekt, die ein Hubwerk und eine horizontal verschwenkbare Transportplattform aufweist (siehe z.B. des Dokument DE-A-3 736 419). Die Erfindung betrifft ferner einen Klimaschrank mit dieser Objekt-Lagervorrichtung.

Eine Objekt-Lagervorrichtung und ein Klimaschrank dieser Art sind aus WO 98/05753 bekannt. Typischerweise werden sie im Labor insbesondere auf dem Gebiet der sogenannten Life Science sowie der sogenannten Material Science eingesetzt. Grundsätzlich können die verschiedensten Arten von Objekten in einer solchen Objekt-Lagervorrichtung untergebracht werden. Standardisierte Objekte in diesem Zusammenhang sind insbesondere Mikrotiterplatten (MTP), die übereinander in stationären oder transportablen Kassetten (Stacker) mit einer vorgegebenen Anzahl von Lagerfächern abgelegt werden. In einer Objekt-Lagervorrichtung sind mehrere Lagerplätze für diese Kassetten nebeneinander angeordnet.

Gemäß WO 98/05753 sind die Kassetten-Lagerplätze in der Art eines Karussells auf einer Drehscheibe angeordnet. Um ein Objekt in einem Lagerfach abzulegen oder aus einem Lagerfach zu entnehmen, ist eine stationäres Hubwerk mit einer horizontal verschwenkbaren Transportplattform vorhanden. Die betreffende Kassette wird dabei mit der Drehscheibe zum Hubwerk gedreht, die Transportplattform wird in die Höhe des Lagerfachs verfahren und in Richtung auf das Lagerfach mittels einer Kniehebelmechanik verschwenkt. Mit der Kniehebelmechanik wird dann eine geradlinige Bewegung der Transportplattform zum Objekt hin beziehungsweise vom Objekt weg ausgeführt, um das Objekt aufzunehmen oder abzulegen.

Systembedingt wird dabei das Verhältnis zwischen der Anzahl der Kassetten-Lagerplätze und der erforderlichen Grundfläche mit zunehmender Anzahl der Kassetten-Lagerplätze immer schlechter. Außerdem sind die Antriebsvorrichtungen für das Hubwerk und den Schwenkmechanismus im Nutzraum angeordnet, was im Hinblick auf die Reinigung des Nutzraums und Desinfizierung nachteilig sein kann.

Der Erfindung liegt die Aufgabe zugrunde, eine Objekt-Lagervorrichtung und einen Klimaschrank der eingangs genannten Art anzugeben, welche mit einer großen Anzahl von Kassetten-Lagerplätzen bei möglichst geringem Platzbedarf bestückbar ist.

Diese Aufgabe wird bei einer Objekt-Lagervorrichtung gemäß Anspruch 1 gelöst.

Die Erfindung hat den Vorteil, dass eine große Anzahl von Lagerplätzen bei einem guten Verhältnis der Lagerplatzfläche zur Gesamtfläche bereitgestellt werden kann, und dass trotzdem ein hoher Automatisierungs- und Zugriffsgrad gewährleistet ist.

Der Belegungsgrad einer vorgegebenen Grundfläche wird dadurch besonders hoch, dass zwei parallele Reihen von Lagerplätzen zu beiden Seiten des Ganges angeordnet sind.

Eine bevorzugte Weiterbildung der Erfindung besteht darin, dass das X-Y-Schienensystem oberhalb der Lagerplätze angeordnet ist, und dass das Hubwerk mit einem freien Ende nach unten hängend am X-Y-Schienensystem aufgehängt ist.

Auf diese Weise wird die gesamte Bodenfläche der Objekt-Lagervorrichtung freigehalten, so dass sie optimal gereinigt und desinfiziert werden kann und somit die Gefahr einer Kontaminierung augeschlossen wird.

Es ist es besonders zweckmäßig, dass das Hubwerk eine Vertikalschiene und ein Vertikalverstellgetriebe für die Transportplattform aufweist. Damit kann mit einfachen Mitteln eine ausreichende Steifigkeit des Hubwerks auch bei einer großen wirksamen Länge bzw. großen vertikalen Wegstrecke erreicht werden.

Die Konstruktion wird dadurch besonders einfach, dass das X-Y-Schienensystem mindestens ein Horizontal-Verstellgetriebe und eine Drehmomentübertragungsvorrichtung aufweist, welche selbsttragend als Schiene dienen. Der Platzbedarf für das X-Y-Schienensystem wird dadurch besonders klein, und die zu reinigenden Oberflächen können klein gehalten werden.

Eine weitere vorteilhafte Ausgestaltung der Erfindung besteht darin, dass das X-Y-Schienensystem einen ersten und zweiten Längs-Schienenstrang aufweist, die zusammen ein Längs-Verstellgetriebe sowie eine erste und zweite Drehmomentübertragungsvorrichtung aufweisen, dass auf dem ersten und zweiten Längs-Schienenstrang ein quer zu diesem verlaufender Querschienenstrang verschiebbar gelagert ist, der ein Quer-Verstellgetriebe und eine dritte Drehmomentübertragungsvorrichtung aufweist, dass das Längs-Verstellgetriebe mit dem Querschienenstrang in Wirkverbindung stehen, dass das Quer-Verstellgetriebe mit dem Fußpunkt des Hubwerks in Wirkverbindung steht, das die erste Drehmomentübertragungsvorrichtung das Quer-Verstellgetriebe beaufschlagt, und dass die zweite Drehmomentübertragungsvorrichtung über die dritte Drehmomentübertragungsvorrichtung das Vertikal-Verstellgetriebe beaufschlagt. Das hat den Vorteil, dass die Transportplattform indirekt mit zwei vorhandenen Verstellgetrieben angesteuert werden kann, wobei die an Antriebs- und Steuervorrichtungen an einer hinsichtlich der Kontaminierungsgefahr unkritischen Stelle außerhalb es Nutzraums angeordnet werden können.

Grundsätzlich kann das X-Y-Schienensystem mit Gleitschienen in Verbindung mit Zugmittelgetrieben ausgebildet werden. Die Konstruktion kann aber besonders einfach und kostengünstig dadurch hergestellt werden, dass das Längs-, Quer- und Vertikal-Verstellgetriebe jeweils als Schneckengetriebe mit einer Längs-, Quer- bzw. Vertikal-Gewindespindel ausgebildet ist. Damit können die Verschiebewege hochgenau ausgeführt werden. Außerdem können die Gewindespindeln ausreichend stabil und biegesteif ausgebildet sein, dass sie auch die Funktion einer Führungs- und Trageschiene übernehmen.

Es ist sehr vorteilhaft, dass die erste, zweite und dritte Horizontal- Drehmomentübertragungsvorrichtung als erste, zweite beziehungsweise dritte Drehmomentwelle ausgebildet sind. Sie können im Rahmen des Schienesystem ebenfalls Führungs- und Tragefunktionen übernehmen insbesondere in Verbindung mit den Gewindespindeln. Besonders beim Quer-Schienenstrang kann auf diese Weise auf zusätzliche Stütz- und Führungsschienen verzichtet werden.

Das gesamte X-Y-Schienensystem kann praktisch selbsttragend dadurch ausgeführt werden, dass der erste Längs-Schienenstrang die erste Drehmomentwelle aufweist, und der zweite Längs-Schienenstrang aus der ersten Gewindespindel und der zweiten Drehmomentwelle besteht, und das der Querschienenstrang aus der zweiten Gewindespindel und der dritten Drehmomentwelle besteht.

Im Hinblick auf die Verringerung der Kontaminationsgefahr ist es ferner von großem Vorteil, dass an den Enden der ersten und zweiten Drehmomentwelle sowie der Längs-Gewindespindel Antriebsvorrichtungen angeordnet sind, und dass die Antriebsvorrichtungen außerhalb eines Innenraumgehäuses angeordnet sind, wobei die erste und zweite Drehmomentwelle durch eine Wand des Innenraumgehäuses geführt sind.

Das X-Y-Schienensystem mit dem Hubwerk und der Transportplattform kann zum Reinigen oder Austauschen auf einfache Weise und in kurzer Zeit vollständig aus dem Innenraum dadurch entfernt werden, dass es auf einem Bodenrahmen mit vier Eckstützen angeordnet ist, und dass es lösbar an den oberen Endbereichen der Eckstützen befestigt ist.

Es ist dabei zur Vermeidung von Wärme-/Kältebrücken zweckmäßig, dass die aus dem Innenraum herausgeführten Enden der ersten und zweiten Drehmomentwelle und der Längs-Gewindespindel im Austrittsbereich mit einem temperaturisolierenden Zwischenstück versehen sind.

Eine bevorzugte Weiterbildung der Erfindung besteht darin, dass an der Transportplattform drehfest ein Mitnehmer und stationär in einer vorgegebenen Höhe ein Anschlag angeordnet sind, dass der Anschlag durch eine Höhenverschiebung der Transportplattform in Wirkverbindung mit dem Mitnehmer bringbar ist, so dass durch eine Horizontalverschiebung der Transportplattform in dieser Position der Mitnehmer am Anschlag angelegt und die Transportplattform horizontal im verschwenkt wird.

Eine besonders genaue Winkelansteuerung mit indirekten Mitteln wird dadurch erreicht, dass der Mitnehmer als Zahnkranz und der Anschlag als Zahnstange ausgebildet ist, so dass der Zahnkranz durch eine Höhenverschiebung der Transportplattform in kämmende Verbindung mit der Zahnstange bringbar ist, und durch eine Horizontalverschiebung der Transportplattform in dieser Position auf der Zahnstange abrollt.

Die Positioniergenauigkeit wird ferner dadurch weiter verbessert, dass die Transportplattform schwenkbar auf einem drehfest auf der Vertikalschiene angeordneten Gleitstück angeordnet ist, und dass zwischen der Transportplattform und dem Gleitstück in vorgegebenen Schwenkwinkelstellungen Rast-Positioniervorrichtungen angeordnet sind.

Die Zugriffswege und Zugriffszeiten werden dadurch besonders kurz, dass die Zahnstange entlang des gesamten Längs- und/oder Quer-Verschiebeweges der Transportplattform angeordnet ist.

Grundsätzlich ist es aber ausreichend, dass die Länge der Zahnstange maximal dem Umfang des Zahnkranzes entspricht.

Die exakte Ausrichtung eines Objekts auf der Transportplattform wird dadurch gewährleistet, dass im Aufnahmebereich der Transportplattform ein Seitenanschlag für ein aufzunehmendes Objekt angeordnet ist, und das dem Seitenanschlag gegenüberliegend ein in Richtung auf den Anschlag federnd vorgespannter Schieber zum Andrücken eines aufgenommenen Objekts gegen den Anschlag angeordnet ist.

Um die Kontaminationsgefahr noch weiter zu verringern, ist es vorteilhaft, dass berührungslose Positionssensoren und/oder Winkelgeber vorhanden sind, deren Empfangsteile außerhalb der Innenraumwandung angeordnet sind. Bevorzugt werden Induktions-Positionssensoren und/oder Induktions-Winkelgeber verwendet. Besonders vorteilhaft ist es, dass die Induktions-Positionssensoren und/oder Induktions-Winkelgeber auf eine Übertragungsstrecke abgestimmt sind, in welcher sich Aluminium befindet, so dass die Innenraumwandung sich aus Aluminiumblech hergestellt werden kann. Die Positionssensoren und Winkelgeber werden bevorzugt dazu verwendet, um eine Nullpunkt-Referenz für die Bewegungsansteuerung der Drehmomentwellen und der Gewindespindeln zu bestimmen.

Die Objekt-Lagervorrichtung wird besonders vorteilhaft in einem Klimaschrank verwendet. Sie ist gleichermaßen gut für Brutschränke, insbesondere Inkubatoren (Begasungsbrutschränke), wie für Gefrier- und Kühlgeräte geeignet.

Nachfolgend für die Erfindung anhand eines in der Zeichnung dargestellten Ausführungsbeispiels weiter beschrieben. Es zeigen schematisch:
- Figur 1: eine perspektivische Ansicht einer Kassette zur Aufnahme von Objekten;
- Figur 2: einen Grundriss einer Objekt-Lagervorrichtung;
- Figur 3: eine Draufsicht auf ein X-Y-Schienensystem bei einer Objekt-Lagervorrichtung gemäß Figur 2;
- Figur 4: eine perspektivische Ansicht des X-Y-Schienensystems aus Figur 3 von unten;
- Figur 5: eine perspektivische Ansicht des Hubwerks aus Figur 3 und 4 von unten in vergrößerter Darstellung; und
- Figur 6: eine Einzelheit des Hubwerks gemäß Figur 5.

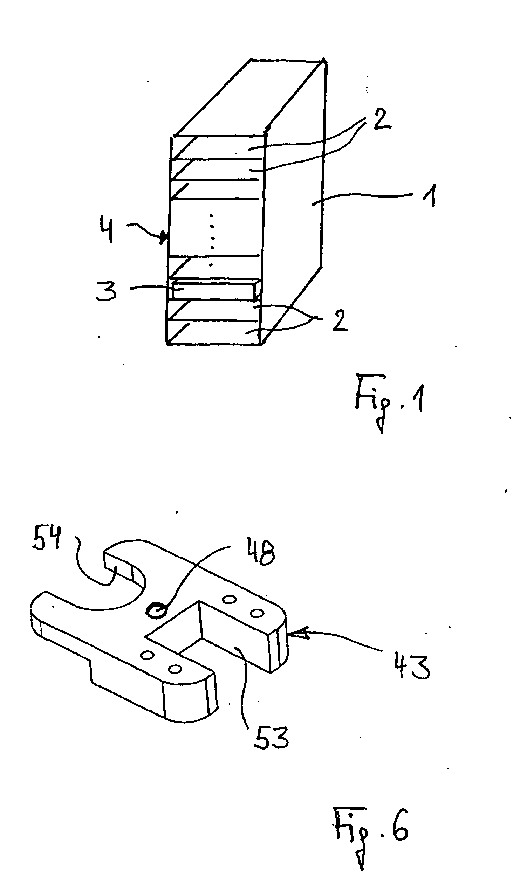

Figur 1 veranschaulicht eine Kassette 1 mit einer Vielzahl von regalartig übereinander angeordneten Lagerfächern 2 für jeweils ein Objekt 3, beispielsweise eine Mikrotiterplatte. Die Lagerfächer 2 sind von einer Stirnseite 4 aus in der Weise zugänglich, dass ein Objekt 3 in einem Lagerfach 2 abgelegt oder aus einem Lagerfach 2 entnommen werden kann.

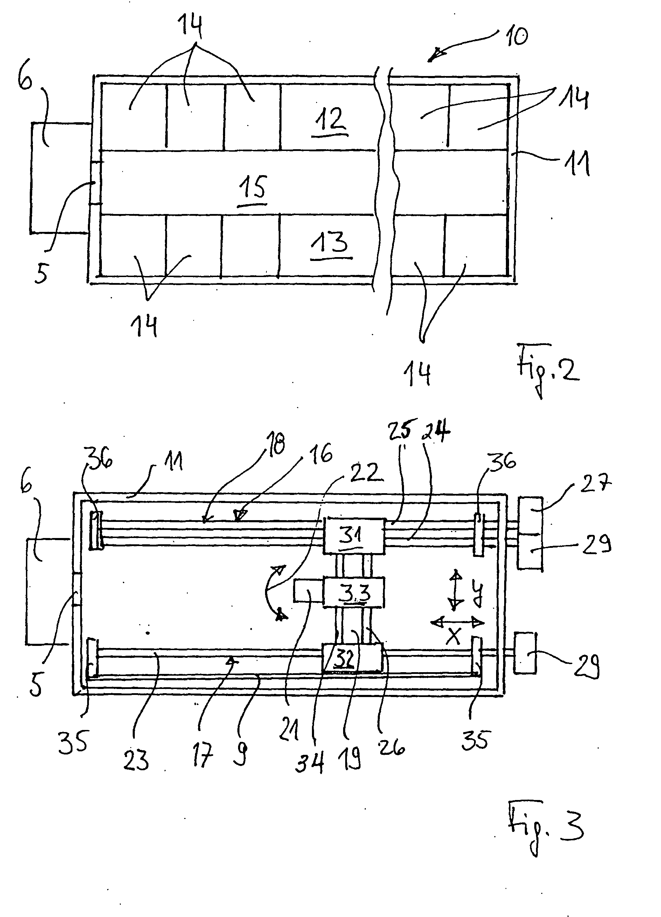

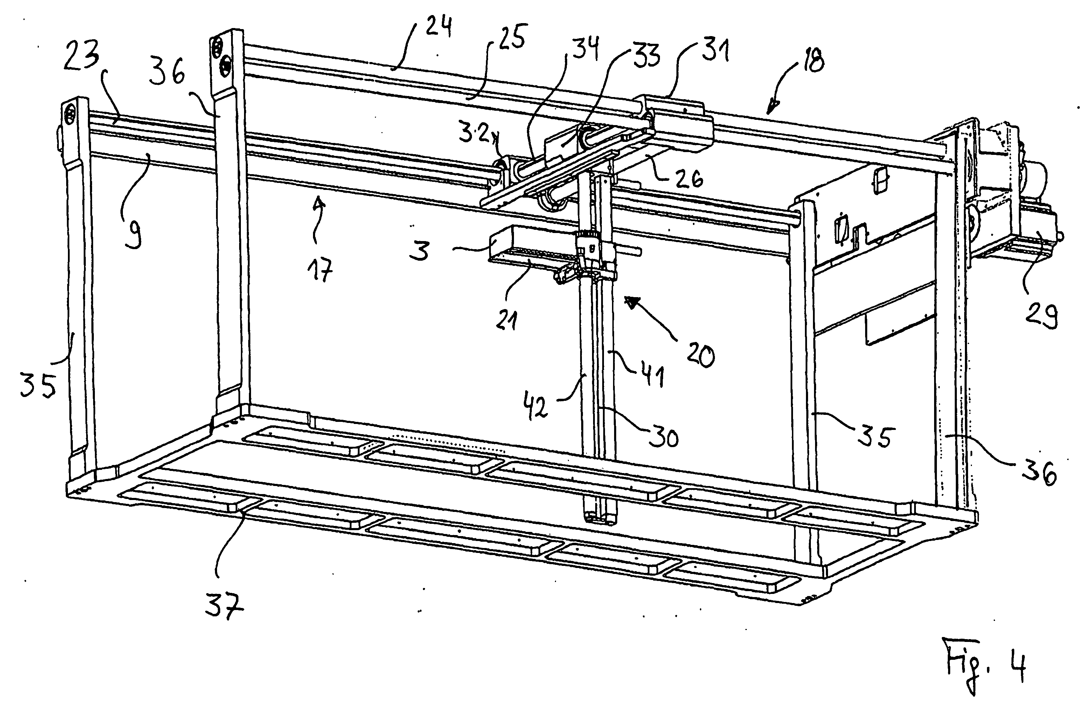

Gemäß Figur 2 ist der Grundriss einer Objekt-Lagervorrichtung am Beispiel einer Klimakammer 10 dargestellt, die von einer Innenwand 11 umgeben ist. Im Innern der Klimakammer 10 sind zwei parallele Zeilen 12, 13 von Lagerplätzen14 für Kassetten 1 (Figur 1) entlang eines Ganges 15 angeordnet. Jeder Lagerplatz 14 kann eine Kassette 1 aufnehmen. Die zugänglichen Stirnseiten 4 der Kassetten 1 sind alle dem Gang 15 zugewandt, so dass alle Lagerfächer vom Gang 15 aus für eine Transportplattform 21 (Figur 3) zugänglich sind. Am Ende des Ganges 15 befindet sich in der Innenwand 11 eine verschließbare Öffnung 5 zu einer Übergabestation 6, um mittels der Transportplattform 21 einzelne Objekte in die Klimakammer 10 zu befördern oder aus der Klimakammer 10 herauszunehmen.

Figur 3 zeigt von oben ein horizontal verlaufenes X-Y-Schienensystem 16, welches im Innern der Klimakammer 10 angeordnet ist. Das X-Y-Schienensystem16 umfasst einen ersten und einen zweiten Längs-Schienenstrang 17, 18 sowie einen dazu orthogonal verlaufenden Quer-Schienenstrang 19, welcher auf den beiden Längs-Schienensträngen 17,18 längsverschieblich gelagert ist.

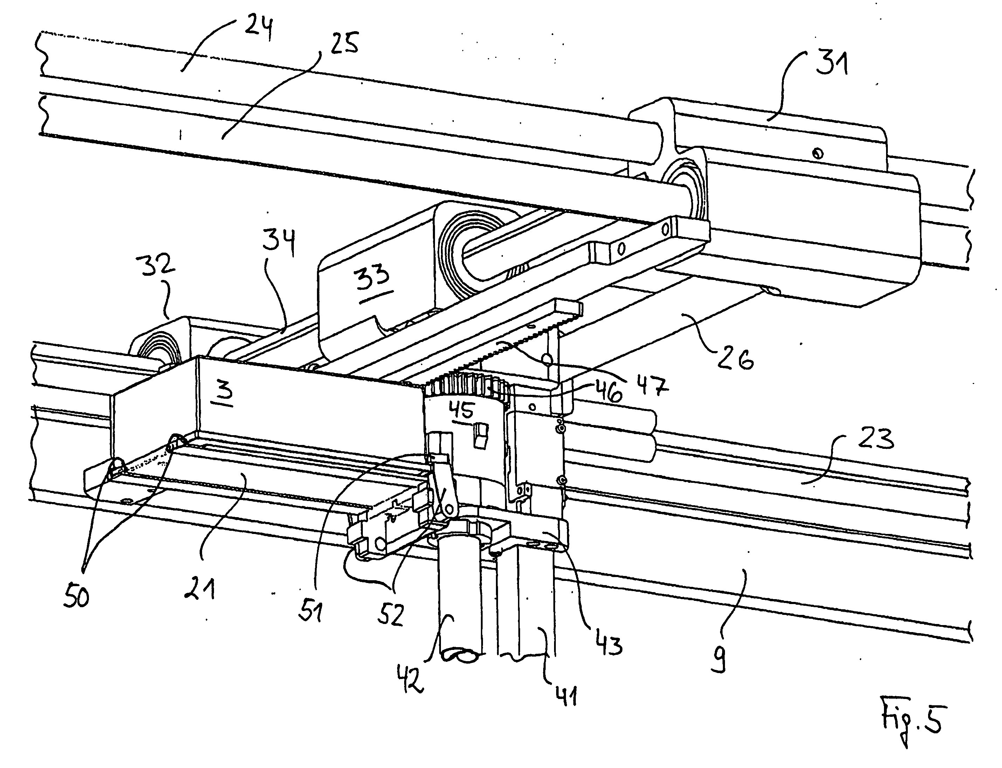

Das X-Y-Schienensystem 16 ist auf vier Eckstützen 35, 36 gelagert, die auf einem Bodenrahmen 37 angebracht sind. Auf dem Bodenrahmen 37 befinden sich ferner die Kassetten-Lagerplätze 14. Das X-Y-Schienensystem16 kann zu Reinigungs- und Wartungsarbeiten einschließlich eines Vertikal-Schienenstranges 30 (Figur 4) von den Eckstützen 35, 36 abgenommen und aus der Klimakammer 10 entfernt werden.

Figur 4 zeigt das X-Y-Schienensystem 16 mit den Eckstützen 35, 36 und dem Bodenrahmen 37. Um die Darstellung übersichtlich zu halten, sind Einzelheiten der Klimakammer nicht dargestellt. Ferner ist eine perspektivische Sicht von unten gewählt, um den am Quer-Schienstrang 19 aufgehängten Vertikal-Schienenstrang 30 einschließlich des Hubwerks 20 für die Transportplattform 21 zu veranschaulichen.

Gemäß Fig. 3 und 4 ist auf den Quer-Schienenstrang 19 querverschieblich der Vertikalschienenstrang 30 mit dem Hubwerk 20 gelagert, mit welchem eine gemäß Pfeil 22 horizontal verschwenkbare Transportplattform 21 zum Fördern eines einzelnen Objekts 3 höhenverschiebbar (senkrecht zur Zeichenebene) ist.

Der erste Längs-Schienenstrang 17 umfasst eine Drehmomentübertragungsvorrichtung in Form einer ersten Drehmomentwelle 23 und im vorliegenden Ausführungsbeispiel optional ferner eine Gleitschiene 9. Der zweite Längs-Schienenstrang 18 besteht aus einem Längs-Verstellgetriebe in Form einer Längs-Gewindespindel 24 sowie aus einer zweiten Drehmomentübertragungsvorrichtung in Form einer zweiten Drehmomentwelle 25. Die Längsschienenstränge 17, 18 tragen das Gewicht des Quer-Schienenstranges 29 einschließlich des Vertikalschienenstranges mit Hubwerk 20 und Transportplattform 21 und dessen Last vollständig.
Die Gleitschiene 9 kann besonders bei einer großen Länge des Längsschienenstranges 17 zweckmäßig sein. Sie verläuft benachbart zur ersten Drehmomentwelle 23 und nimmt einen Teil der Last des Quer-Schienenstranges 19 auf.

Der Quer-Schienenstrang 19 besteht selbsttragend aus einem Quer-Verstellgetriebe in Form einer Quer-Gewindespindel 26 sowie einer dritten Drehmomentübertragungsvorrichtung in Form einer dritten Drehmomentwelle 27. Er nimmt die Last des Vertikal-Schienenstranges 30 vollständig auf.

Außerhalb der Innenwand 11 der Klimakammer 10 sind eine Längs-Antriebsvorrichtung 27, eine Quer-Antriebsvorrichtung 28 und eine Vertikal-Antriebsvorrichtung 29 jeweils in Form eines Schrittmotors angeordnet, mit welchen der Quer-Schienenstrang 19 und der Fußpunkt des Vertikalschienenstranges 30 in der Horizontalebene und die Transportplattform 21 vertikal verfahren werden. Die drei Antriebsvorrichtungen 27, 28, 29 sind fest an der Klimakammer 10 montiert.

Die Längs-Antriebsvorrichtung 27 beaufschlagt ein freies Ende der Längs-Gewindespindel 24, die über eine Spindelmutter (nicht dargestellt) auf einen Lagerwagen 31 des Quer-Schienenstranges 19 wirkt. Die Vertikal-Antriebsvorrichtung 29 beaufschlagt die erste Drehmomentwelle 23, welche über ein Winkelgetriebe (nicht dargestellt) auf einem weiteren Lagerwagen 32 auf die zweite Drehmomentwelle 25 wirkt. Diese überträgt das Drehmoment über ein weiteres Winkelgetriebe (nicht dargestellt) auf einem weiteren Lagerwagen 33 auf eine Vertikal-Gewindespindel 34 (Figur 4). Die Quer-Antriebsvorrichtung 28 beaufschlagt die zweite Drehmomentwelle 25, die über ein Winkelgetriebe (nicht dargestellt) am Lagerwagen 31 mit der Quer-Gewindespindel 26 in Wirkverbindung steht, welche auf einen dritten Lagerwagen 33 mit Spindelmutter (nicht dargestellt) des Vertikal-Schienenstrangs 30 wirkt.

Die erste Drehmomentwelle 23 und die Gleitschiene 9 sind in zwei Eckstützen 35 gelagert, und die zweite Drehmomentwelle 25 sowie die Längs-Gewindespindel 24 sind in zwei weiteren Eckstützen 36 gelagert. Die antriebseitigen Lager sind als Festlager und die Lager an den gegenüberliegenden Stützen sind als Loslager ausgebildet. Auf diese Weise kann ein Ausgleich für eventuelle Toleranzen und temperaturbedingte Veränderungen erfolgen, und die Verbindung von Wellen und Antriebsvorrichtungen ist entlastet.

Figur 5 veranschaulicht in einer vergrößerten Darstellung Einzelheiten eines Schwenkmechanismus, über welchen eine horizontale Schwenkbewegung der Transportplattform 21 angesteuert und ausgeführt wird. Der Vertikal-Schienenstrang 30 besteht aus einer Vertikal-Schiene 41 und einem Vertikal-Verstellgetriebe in Form einer Vertikal-Gewindespindel 42. Die Vertikal-Schiene 41 und die Vertikal-Gewindespindel 42 bilden ein Hubwerk für die Transportplattform 21. Das freie Ende der Vertikal-Schiene 41 und der Vertikal-Gewindespindel 42 befindet sich frei im Raum.

Ein Basisteil 43 ist auf der Vertikal-Schiene 41 und der dritten Gewindespindel 42 drehfest verschiebbar geführt. Auf das Basisteil 43 wirkt eine von der dritten Gewindespindel 42 betätigte Spindelmutter (nicht dargestellt) zur Vertikalverschiebung der Transportplattform 21.

Das Basisteil 43 trägt eine Halterung 45, an welcher die Transportplattform 21 drehfest angebracht ist. Die Halterung 45 ist auf dem Basisteil 43 um die dritte Gewindespindel 42 drehbar gelagert. Die Halterung weist ferner einen Zahnkranz 46 konzentrisch mit der dritten Gewindespindel 42 auf. Ein Verdrehen des Zahnkranzes 46 bewirkt ein Verschwenken der Transportplattform 21.

Entlang eines Teilstückes des Quer-Verschiebeweges der Vertikalschiene 41 bzw. der Transportplattform 21 entlang des Querschienenstranges 19 ist am Querschienenstrang 19 eine Zahnstange 47 angeordnet, die bezüglich der Vertikalschiene 41 bzw. der Transportplattform stationär ist. Die Zahnstange 47 befindet sich in einer vorgegebenen Höhe am Ende des Vertikalverschiebewegs der Transportplattform 21.

Durch eine Höhenverschiebung der Halterung 45 bzw. der Transportplattform 21 wird der Zahnkranz 46 in kämmende Verbindung mit der Zahnstange 47 gebracht. Wenn die Vertikal-Schiene 41 mit der Halterung 45 und der Transportplattform 21 entlang des Quer-Schienenstranges 19 horizontal verfahren wird, rollt der Zahnkranz 46 auf der Zahnstange 47 ab, was eine Verschwenkung der Transportplattform bewirkt. Der Schwenkwinkel ist dabei von der Länge des Horizontalverschiebeweges der Transportplattform abhängig. Diese Schwenkbewegung wird also indirekt durch ein Zusammenwirken der Quer-Antriebsvorrichtung 28 und der Vertikal-Antriebsvorrichtung 29 gesteuert und ausgeführt.

Der Gang 15 ist so bemessen, dass der Vertikal-Schienenstrang 30 einschließlich eines aufgenommenen Objekts 3 ungehindert alle Kassetten und alle Lagerfächer in den beiden Zeilen 12, 13 anfahren kann.

Um Objekte aus der Übergabestation 6 in definierter Ausrichtung übernehmen oder an diese übergeben zu können, und um die Lagerfächer ordnungsgemäß bedienen zu können, sind bei einer Objektlagervorrichtung gemäß Figur 2 mit zwei Zeilen 12 mindestens drei um 90 Grad versetzte Schwenkwinkelstellungen der Transportplattform21 genau einzuhalten. Zu diesem Zweck ist gemäß Figur 6 eine Rastpositioniervorrichtungen in Form eines Kugeldruckstückes 48 am Basisteil 43 angeordnet, das mit drei Ausnehmungen an der Unterseite der Halterung 45 zusammenwirkt. Sobald die Halterung eine der drei um 90 Grad versetzten Positionen erreicht, rastet das Kugeldruckstück ein. Am Basisteil 53 ist eine Ausnehmung 53 vorhanden, mit welcher es auf der Vertikal-Schiene 41 geführt ist. Eine weitere Ausnehmung 54 dient zur Drehlagerung der Halterung 45.

Am freien Ende eines Aufnahmebereichs 49 der Transportplattform 21 sind Anschläge 50 für ein aufzunehmendes Objekt 3 angeordnet, welche eine genaue Positionierung des Objekts 3 auf dem Aufnahmebereich 49 gewährleisten. Den Anschlägen 50 gegenüberliegend befindet sich ein federnd vorgespannter Schieber 51, der über Hebelarme 52 in Richtung auf die Anschläge 50 auslenkbar ist. Der Schieber richtet das Objekt 3 auf den Anschlag 50 aus und hält das Objekt 3 durch Federdruck fest.

Der Schieber 51 wird ferner von einem kassettenseitigen Anschlag und einem Anschlag (nicht dargestellt) im Bereich der Übergabestation 6 in der Weise angesteuert, dass er entgegen der Federkraft zurückgeschoben wird und das Objekt 3 freigibt.

## Patentansprüche

1. Objekt-Lagervorrichtung mit mindestens zwei Lagerplätzen (14) für Objekt-Kassetten (1) sowie mit einer horizontal verschwenkbaren Transportplattform (21), die über ein Hubwerk (20) höhenverschiebbar ist, wobei die Lagerplätze (14) in einer abschließbaren Klimakammer (10) innerhalb der Innenwände (11) angeordnet sind, wobei
die Lagerplätze (14) nebeneinander in mindestens einer Zeile (12, 13) entlang eines Ganges (15) angeordnet sind, das Hubwerk (20) an einem Fußpunkt angeordnet ist, der über ein X-Y-Schienensystem (16) horizontal verfahrbar ist, die Transportplattform (21) indirekt über mindestens ein Verstellgetriebe angesteuert ist, und wobei die Antriebsvorrichtung (27, 28, 29) für das Verstellgetriebe außerhalb der Klimakammer (10) angeordnet ist.

2. Objekt-Lagervorrichtung nach Anspruch 1, **dadurch gekennzeichnet, dass** zwei parallele Zeilen (12,13) von Lagerplätzen (14) zu beiden Seiten des Ganges (15) angeordnet sind.

3. Objekt-Lagervorrichtung nach Anspruch 1 oder 2, **dadurch gekennzeichnet, dass** das X-Y-Schienensystem (16) oberhalb der Lagerplätze (14) angeordnet ist, und dass das Hubwerk (20) mit einem freien Ende nach unten hängend am X-Y-Schienensystem (16) aufgehängt ist.

4. Objekt-Lagervorrichtung nach einem der Ansprüche 1 bis 3,
**dadurch gekennzeichnet, dass** das Hubwerk (20) eine Vertikalschiene (41) und ein Vertikal-Verstellgetriebe für die Transportplattform (21) aufweist.

5. Objekt-Lagervorrichtung nach einem der vorhergehenden Ansprüche,
**dadurch gekennzeichnet, dass** das X-Y-Schienensystem (16) mindestens ein Horizontal-Verstellgetriebe und eine Drehmomentübertragungsvorrichtung aufweist, welche selbstragend als Schiene dienen.

6. Objekt-Lagervorrichtung nach einem der vorhergehenden Ansprüche,
**dadurch gekennzeichnet, dass** das X-Y-Schienensystem (16) einen ersten und zweiten Längs-Schienenstrang (17, 18) aufweist, die zusammen ein Längs-Verstellgetriebe sowie eine erste und zweite Drehmomentübertragungsvorrichtung aufweisen, dass auf dem ersten und zweiten Längs-Schienenstrang (17, 18) ein quer zu diesem verlaufender Quer-Schienenstrang (19) verschiebbar gelagert ist, der ein Quer-Verstellgetriebe und eine dritte Drehmomentübertragungsvorrichtung aufweist, dass das Längs-Verstellgetriebe mit dem Quer-Schienenstrang (19) in Wirkverbindung steht, dass das Quer-Verstellgetriebe mit dem Fußpunkt des Hubwerks (20) in Wirkverbindung steht, dass die erste Drehmomentübertragungsvorrichtung das Quer-Verstellgetriebe beaufschlagt, und dass die zweite Drehmomentübertragungsvorrichtungen über die dritte Drehmomentübertragungsvorrichtung das Vertikal-Verstellgetriebe beaufschlagt.

7. Objekt-Lagervorrichtung nach Anspruch 6, **dadurch gekennzeichnet, dass** das Längs-, Quer- und Vertikal-Verstellgetriebe jeweils als Schneckengetriebe mit einer Längs-, Quer- bzw. Vertikal-Gewindespindel (24, 26, 42) ausgebildet sind .

8. Objekt-Lagervorrichtung nach einem der Ansprüche 6 oder 7,
**dadurch gekennzeichnet, dass** die erste, zweite und dritte Drehmomentübertragungsvorrichtung als erste, zweite bzw. dritte Drehmomentwelle (23, 25, 34) ausgebildet sind.

9. Objekt-Lagervorrichtung nach einem der Ansprüche 6 bis 8,
**dadurch gekennzeichnet, dass** der erste Längs-Schienenstrang (17) die erste Drehmomentwelle (23) aufweist und der zweite Längs-Schienenstrang (18) aus der Längs-Gewindespindel (24) und der zweiten Drehmomentwelle (25) besteht, und dass der Quer-Schienenstrang (19) aus der Quer-Gewindespindel (26) und der dritten Drehmomentwelle (34) besteht.

10. Objekt-Lagervorrichtung nach einem der Ansprüche 6 bis 9,
**dadurch gekennzeichnet, dass** ein Innenraumgehäuse vorhanden ist, dass die mit einer Antriebsvorrichtung (27, 28, 29) beaufschlagten Enden der ersten und zweiten Drehmomentwelle (23, 25) und der Längs-Gewindespindel (24) aus dem Innenraumgehäuse herausgeführt sind, und das die zugehörigen Antriebsvorrichtungen (27, 28, 29) außerhalb der Klimakammer (10) angeordnet sind.

11. Objekt-Lagervorrichtung nach Anspruch 10,
**dadurch gekennzeichnet, dass** die aus dem Innenraumgehäuse herausgeführten Enden der ersten und zweiten Horizontal-Drehmomentwelle (23,25) und der Längs-Gewindespindel (24) im Austrittsbereich mit einem temperaturisolierenden Zwischenstück versehen sind.

12. Objekt-Lagervorrichtung nach einem der vorhergehenden Ansprüche 6 bis 11,
**dadurch gekennzeichnet, dass** die erste und zweite Drehmomentwelle (23, 25) und die Längs-Gewindespindel (24) zusammen mit der dritten Drehmomentwelle (34) und der Quer-Gewindespindel (26) im Deckenbereich der Klimakammer (10) angeordnet sind, und dass die Vertikalschiene(41) und Vertikal-Gewindespindel (42) an der dritten Drehmomentwelle (34) und der Quer-Gewindespinde (26) aufgehängt sind.

13. Objekt-Lagervorrichtung nach einem der vorhergehenden Ansprüche,
**dadurch** gekennzechnet, dass an der Transportplattform (21) drehfest ein Mitnehmer und stationär in einer vorgegebenen Höhe ein Anschlag angeordnet sind, dass der Anschlag durch eine Höhenverschiebung der Transportplattform (21) in Wirkverbindung mit dem Mitnehmer bringbar ist, so dass durch eine Horizontalverschiebung der Transportplattform (21) in dieser Vertikal- Position der Mitnehmer am Anschlag ausgelenkt und die Transportplattform (21) verschwenkt wird.

14. Objekt-Lagervorrichtung nach Anspruch 12 oder 13,
**dadurch** gekennzechnet, dass der Mitnehmer als Zahnkranz (46) und der Anschlag als Zahnstange (47) ausgebildet sind, so dass der Zahnkranz (46) durch eine Höhenverschiebung der Transportplattform (21) in kämmende Verbindung mit der Zahnstange (47) bringbar ist, und durch eine Horizontalverschiebung der Transportplattform (21) in dieser Vertikal-Position der Zahnkranz (46) auf der Zahnstange (47) abrollt und die Transportplattform (21) verschwenkt wird.

15. Objekt-Lagervorrichtung nach einem der Ansprüche 12 bis 14,
**dadurch gekennzeichnet, dass**
die Zahnstange (47) entlang des gesamten Horizontalverschiebeweges der Transportplattform (21) angeordnet ist.

16. Objekt-Lagervorrichtung nach Anspruch 15,
**dadurch gekennzeichnet, dass**
die Zahnstange (47) entlang eines Horizontalverschiebeweges der Transportplattform (21) angeordnet ist, der maximal dem Umfang des Zahnkranzes (46) entspricht.

17. Objekt-Lagervorrichtung nach einem der vorhergehenden Ansprüche, **dadurch gekennzeichnet, daß** die Transportplattform (21) schwenkbar auf einem drehfesten auf der Vertikalschiene angeordneten Basisteil (43) angeordnet ist, und dass zwischen der Transportplattform (21) und dem Basisteil (43) in vorgegebenen Schwenkwinkelstellungen Rast-Positionierungsvorrichtungen angeordnet sind.

18. Objekt-Lagervorrichtung nach einem der vorhergehenden Ansprüche,
**dadurch gekennzeichnet, dass** im Aufnahmebereich (48) der Transportplattform (21) ein Seitenanschlag (50) für ein aufzunehmendes Objekt (3) angeordnet ist, und dass dem Seitenschlag (50) gegenüberliegend ein in Richtung auf den Anschlag (50) federnd vorgespannter Schieber (51) zum Andrücken eines aufgenommenen Objekts (3) gegen den Anschlag (50) angeordnet ist.

19. Objekt-Lagervorrichtung nach einem der vorhergehenden Ansprüche,
**dadurch gekennzeichnet, dass** berührungslose Positionssensoren und/oder Winkelgeber vorhanden sind, deren Empfangsteil jeweils außerhalb der Innenraumwand (11) angeordnet ist.

20. Objekt-Lagervorrichtung nach Anspruch 18 oder 19,
**dadurch gekennzeichnet, dass** Induktions-Positionssensoren und/oder Induktions-Winkelgeber verwendet sind

21. Objekt-Lagervorrichtung nach Anspruch 20, **dadurch gekennzeichnet, dass** die Induktions-Positionssensoren und/oder Induktions-Winkelgeber auf eine Übertragungsstrecke abgestimmt sind, in der sich Aluminium befindet.

## Claims

1. Object storage device with at least two storage spaces (14) for object cassettes (1) as well as with a horizontally tiltable transport platform (21), whose height can be displaced via a hoisting unit (20), with the storage spaces (14) being arranged in a closable climatic chamber (10) within the internal walls (11), with the storage spaces (14) being arranged next to each other in at least one row (12,13) along a passage (15), with the hoisting unit (20) being arranged at a base point, which can be horizontally displaced over an X-Y track system (16), the transport platform (21) being controlled indirectly via at least one control gear, and with the drive device (27, 28, 29) for the control gear being arranged outside the climatic chamber (10).

2. Object storage device according to claim 1, **characterized in that** two parallel rows (12,13) of storage spaces (14) are arranged on both sides of the passage (15).

3. Object storage device according to claim 1 or 2, **characterized in that** the X-Y track system (16) is located above the storage spaces (14) and **in that** the hoisting unit (20) is suspended on the X-Y track system (16) with one free end hanging down.

4. Object storage device according to one of claims 1-3, **characterized in that** the hoisting unit (20) has a vertical track (41) and a vertical control gear for the transport platform (21).

5. Object storage device according to one of the preceding claims, **characterized in that** the X-Y track system (16) has at least one horizontal control gear and a torque transfer device, which, in a self-supporting manner, function as a track.

6. Object storage device according to one of the preceding claims, **characterized in that** the X-Y track system (16) has first and second longitudinal rail track assemblys (17,18), which, together, have a longitudinal control gear as well as first and second torque transfer devices, **in that**, on the first and second longitudinal rail track assembly (17,18), a transverse rail track assembly (19) is placed, transversely thereto, in such a way that it can be displaced, which has a transverse control gear and a third torque transfer device, **in that** the longitudinal control gear is in active connection with the transverse rail track assembly (19), **in that** the transverse control gear is in active connection with the base point of the hoisting unit (20), **in that** the first torque transfer device acts on the transverse control gear, and **in that** the second torque transfer device acts on the vertical control gear via the third torque transfer device.

7. Object storage device according to claim 6, **characterized in that** the longitudinal, transverse and vertical control gears are each designed as worm gears with a longitudinal, transverse or vertical threaded spindle (24,26,42).

8. Object storage device according to one of claims 6 or 7, **characterized in that** the first, second and third torque transfer devices are designed as first, second and third torque shafts (23,25,34), respectively.

9. Object storage device according to one of claims 6-8, **characterized in that** the first longitudinal rail track assembly (17) comprises the first torque shaft (23), and the second longitudinal rail track assembly (18) consists of the longitudinal threaded spindle (24) and the second torque shaft (25), and **in that** the transverse rail track assembly (19) consists of the transverse threaded spindle (26) and the third torque shaft (34).

10. Object storage device according to one of claims 6-9, **characterized in that** an internal space housing is present, **in that** the ends of the first and second torque shafts (23,25) and of the longitudinal threaded spindle (24), are led out of the internal space housing, with a drive device (27,28,29) acting on said ends, and **in that** the associated drive devices (27,28,29) are arranged outside of the climatic chamber (10).

11. Object storage device according to claim 10, **characterized in that** the ends of the first and second horizontal torque shafts (23,25) and the longitudinal threaded spindle (24), which are led out of the internal space housing, are provided, in the outlet area, with a temperature insulating intermediate part.

12. Object storage device according to one of the preceding claims 6-11, **characterized in that** the first and second torque shafts (23,25) and the longitudinal threaded spindle (24), together with a third torque shaft (34) and the transverse threaded spindle (26) are arranged in the cover area of the climatic chamber (10), and **in that** the vertical track (41) and the vertical threaded spindle (42) are suspended from the third torque shaft (34) and the transverse threaded spindle (26).

13. Object storage device according to one of the preceding claims, **characterized in that** an entraining element is attached on the transport platform (21) in a torsion proof way and a stop is arranged in a stationary manner at a predetermined height, **in that** the stop can be brought into active connection with the entrainer by displacing the height of the transport platform (21), so that, as a result of a horizontal displacement of the transport platform (21), the entrainer turns against the stop in this vertical position, and the transport platform (21) is tilted.

14. Object storage device according to claim 12 or 13, **characterized in that** the entraining element is designed as a toothed ring (46) and the stop as a toothed rack (47), so that the toothed ring (46) can be brought, as a result of a displacement in the height of the transport platform (21), into intermeshing connection with the toothed rack (47), and, as a result of a horizontal shift of the transport platform, the toothed ring (46) travels out on the toothed rack (47) in this vertical position and the transport platform (21) is tilted.

15. Object storage device according to one of claims 12-14, **characterized in that** the toothed rack (47) is arranged along the entire horizontal displacement path of the transport platform (21).

16. Object storage device according to claim 15, **characterized in that** the toothed rack (47) is arranged along a horizontal displacement path of the transport platform (21), which maximally corresponds to the circumference of the toothed ring (46).

17. Object storage device according to one of the preceding claims, **characterized in that** the transport platform (21) is arranged in a manner so it can be tilted on a base part (43) which is attached to the vertical track in a torsion proof manner, and **in that** between the transport platform (21) and the base part (43), notched positioning devices are arranged at predetermined tilt angle positions.

18. Object storage device according to one of the preceding claims, **characterized in that** in the receiving area (48) of the transport platform (21), a lateral stop (50) is arranged for an object (3) to be received, and **in that**, opposite the lateral stop (50), a slide (51), pretensioned due to a spring in the direction of the stop (50), is arranged for pressing a received object (3) against the stop (50).

19. Object storage device according to one of the preceding claims, **characterized in that** contact-free position sensors and/or angle indicators are present, whose receiving part in each case is arranged outside of the internal wall (11).

20. Object storage device according to claim 18 or 19, **characterized in that** inductive position sensors and/or inductive angle indicators are used.

21. Object storage device according to claim 20, **characterized in that** the inductive position sensors and/or inductive angle indicators are set on a transfer section in which aluminum is located.

## Revendications

1. Dispositif de rangement d'objets avec au moins deux emplacements de rangement (14) pour des cassettes objets (1) ainsi qu'avec une plate-forme de transport (21) pivotant horizontalement, qui est mobile en hauteur par l'intermédiaire d'un mécanisme de levage (20), les emplacements de rangement (14) étant situés dans une chambre climatique (10) à fermeture, à l'intérieur des parois intérieures (11), les emplacements de rangement (14) étant placés l'un à côté de l'autre en au moins une rangée (12, 13) le long d'un couloir (15), le mécanisme de levage (20) étant placé en un point de pied qui est mobile horizontalement par l'intermédiaire d'un système de rails X-Y, la plate-forme de transport (21) étant commandée indirectement par l'intermédiaire d'au moins un organe de déplacement, et le dispositif d'entraînement (27, 28, 29) pour l'organe de déplacement étant placé à l'extérieur de la chambre climatique (10).

2. Dispositif de rangement d'objets selon la revendication 1, ***caractérisé en ce que*** deux rangées parallèles (12, 13) d'emplacements de rangement (14) sont placées des deux côtés du couloir (15).

3. Dispositif de rangement d'objets selon la revendication 1 ou 2, ***caractérisé en ce que*** le système de rails X-Y (16) est placé au-dessus des emplacements de rangement (14), et ***en ce que*** le mécanisme de levage (20) est suspendu avec une extrémité libre vers le bas sur le système de rails X-Y.

4. Dispositif de rangement d'objets selon l'une quelconque des revendications 1 à 3,
***caractérisé en ce que*** le mécanisme de levage (20) comprend un rail vertical (41) et un organe de déplacement vertical pour la plate-forme de transport (21).

5. Dispositif de rangement d'objets selon l'une quelconque des revendications précédentes, ***caractérisé en ce que*** le système de rails X-Y (16) présente au moins un organe de déplacement horizontal et un dispositif de transmission de couple, qui servent de rail de manière autoporteuse.

6. Dispositif de rangement d'objets selon l'une quelconque des revendications précédentes, ***caractérisé en ce que*** le système de rails X-Y (16) présente une première et une deuxième sections de rail longitudinales (17, 18) qui présentent en commun un organe de déplacement longitudinal et un premier et un deuxième dispositifs de transmission de couple, ***en ce que*** sur la première et la deuxième sections de rail longitudinales (17, 18) est montée mobile une section de rail transversale (19) s'étendant transversalement à celles-ci, qui présente un organe de déplacement transversal et un troisième dispositif de transmission de couple, ***en ce que*** l'organe de déplacement longitudinal est en liaison active avec la section de rail transversale (19), ***en ce que*** l'organe de déplacement transversal est en liaison active avec le pied du mécanisme de levage (20), ***en ce que*** le premier dispositif de transmission de couple charge l'organe de déplacement transversal, et ***en ce que*** le deuxième dispositif de transmission de couple charge l'organe de déplacement vertical par l'intermédiaire du troisième dispositif de transmission de couple.

7. Dispositif de rangement d'objets selon la revendication 6, ***caractérisé en ce que*** les organes de déplacement longitudinal, transversal et vertical sont conformés chacun en engrenage à vis sans fin avec une vis longitudinale, transversale ou verticale (24, 26, 42).

8. Dispositif de rangement d'objets selon l'une quelconque des revendications 6 ou 7, ***caractérisé en ce que*** le premier, le deuxième et le troisième dispositifs de transmission de couple sont respectivement conformés en premier, deuxième et troisième arbres de couple (23, 25, 34).

9. Dispositif de rangement d'objets selon l'une quelconque des revendications 6 à 8, ***caractérisé en ce que*** la première section de rail longitudinale (17) comprend le premier arbre de couple (23) et la deuxième section de rail longitudinale (18) est composée de la vis longitudinale (24) et du deuxième arbre de couple (25), et ***en ce que*** la section de rail transversale (19) est composée de la vis transversale (26) et du troisième arbre de couple (34).

10. Dispositif de rangement d'objets selon l'une quelconque des revendications 6 à 9, ***caractérisé en ce qu*****'**un boîtier intérieur est présent, ***en ce que*** les extrémités du premier et du deuxième arbre de couple (23, 25) et de la vis longitudinale (24) chargées par un dispositif d'entraînement (27, 28, 29) sortent du boîtier intérieur, et ***en ce que*** les dispositifs d'entraînement associés (27, 28, 29) sont placés en dehors de la chambre climatique (10).

11. Dispositif de rangement d'objets selon la revendication 10, ***caractérisé en ce que*** les extrémités du premier et du deuxième arbres de couple (23, 25) et de la vis longitudinale (24) sortant du boîtier intérieur sont munies d'une pièce intermédiaire isolée thermiquement dans la zone de sortie.

12. Dispositif de rangement d'objets selon l'une quelconque des revendications 6 à 11, ***caractérisé en ce que*** le premier et le deuxième arbres de couple (23, 25) et la vis longitudinale (24) sont placés avec le troisième arbre de couple (34) et la vis transversale (26) au niveau du plafond de la chambre climatique (10), et ***en ce que*** le rail vertical (41) et la vis verticale (42) sont suspendus au troisième arbre de couple (34) et à la vis transversale (26).

13. Dispositif de rangement d'objets selon l'une quelconque des revendications précédentes, ***caractérisé en ce qu*****'**un entraîneur rotatif et une butée stationnaire à une hauteur prédéterminée sont placés sur la plate-forme de transport (21), ***en ce que*** la butée peut être mise en liaison active avec l'entraîneur par un déplacement en hauteur de la plate-forme de transport (21), de façon que, par un déplacement horizontal de la plate-forme de transport (21) dans cette position verticale, l'entraîneur soit dévié sur la butée et la plate-forme de transport (21) soit entraînée en pivotement.

14. Dispositif de rangement d'objets selon la revendication 12 ou 13, ***caractérisé en ce que*** l'entraîneur est conformé en couronne dentée (46) et la butée en crémaillère (47), de façon que la couronne dentée (46) puisse être mise en prise d'engrènement avec la crémaillère (47) par un déplacement en hauteur de la plate-forme de transport (21) et, par un déplacement horizontal de la plate-forme de transport (21) dans cette position verticale, la couronne dentée (46) roule sur la crémaillère (47) et la plate-forme de transport (21) soit entraînée en pivotement.

15. Dispositif de rangement d'objets selon l'une quelconque des revendications 12 à 14, ***caractérisé en ce que*** la crémaillère (47) est placée le long de toute la course de déplacement horizontale de la plate-forme de transport (21).

16. Dispositif de rangement d'objets selon la revendication 15, ***caractérisé en ce que*** la crémaillère (47) est placée le long d'une course de déplacement horizontale de la plate-forme de transport (21) qui correspond au maximum à la circonférence de la couronne dentée (46).

17. Dispositif de rangement d'objets selon l'une quelconque des revendications précédentes, ***caractérisé en ce que*** la plate-forme de transport (21) est montée pivotante sur une partie de base (43) placée rotative sur le rail vertical, et ***en ce qu***'entre la plate-forme de transport (21) et la partie de base (43), des dispositifs de positionnement à encliquetage sont placés en des positions angulaires de pivotement prédéterminées.

18. Dispositif de rangement d'objets selon l'une quelconque des revendications précédentes, ***caractérisé en ce que*** dans la zone de réception (48) de la plate-forme de transport est placée une butée latérale (50) pour un objet à loger, et ***en ce qu***'en face de la butée latérale (50) est placé un coulisseau (51) monté sur ressort en direction de la butée (50) pour pousser un objet logé (3) contre la butée (50).

19. Dispositif de rangement d'objets selon l'une quelconque des revendications précédentes, ***caractérisé en ce que*** des capteurs de position sans contact et/ou des codeurs d'angle sont présents, dont la partie réceptrice est placée à chaque fois à l'extérieur de la paroi intérieure (11).

20. Dispositif de rangement d'objets selon la revendication 18 ou 19, ***caractérisé en ce que*** des capteurs inductifs de position ou des codeurs angulaires inductifs sont utilisés.

21. Dispositif de rangement d'objets selon la revendication 20, ***caractérisé en ce que*** les capteurs inductifs de position et/ou les codeurs angulaires inductifs sont accordés pour une ligne de transmission sur laquelle se trouve de l'aluminium.
